# EUROPEAN PATENT SPECIFICATION

(11) **EP 1 890 425 B1**
(45) Date of publication and mention of the grant of the patent: **13.04.2011**
(21) Application number: 06791187.5
(22) Date of filing: 30.09.2006
(51) Int. Cl.: H04L 12/24, G06F 17/00, G06F 17/30

(54) **A DISTRIBUTED DATA MANAGEMENT SYSTEM AND A METHOD FOR DATA DYNAMIC SUBSCRIBING**
VERTEILTES DATENVERWALTUNGS SYSTEM UND VERFAHREN FÜR DATENDYNAMISCHES ABONNIEREN
SYSTEME DE GESTION DE DONNEES DISTRIBUEE ET PROCEDE D'ABONNEMENT DYNAMIQUE AUX DONNEES

(30) Priority: 22.12.2005 CN 200510121233
(43) Date of publication of application: 20.02.2008
(73) Proprietor: Huawei Technologies Co., Ltd., Longgang District, Shenzhen Guangdong 518129 (CN)
(72) Inventor: LI, Zijun, Guangdong Province 518129 (CN); WANG, Yuanwen, Guangdong Province 518129 (CN); WANG, Minan, Guangdong Province 518129 (CN)
(74) Representative: Epping - Hermann - Fischer
(86) International application number: PCT/CN2006/002601
(87) International publication number: WO 2007/071142

(56) References cited:
- WO-A-97/41654
- WO-A1-2005/020102
- CN-A- 1 239 252
- CN-A- 1 687 922
- US-A1- 2005 129 010
- US-B1- 6 334 178

## Description

### Field of the Invention

The present invention relates to a data synchronization technology, in particular, to a distributed data management system and a method for dynamically subscribing to data.

### Background of the Invention

Due to the complexity of software work, the working system usually consists of a plurality of devices in different sites. In the system, data is usually not gathered in one place; in stead, they are distributed in each device in different sites. The data in different sites is referred to as distributed data. As is needed by software work, an application module in a working system often needs to access the distributed data. If the application module and the accessed data are not in the same device, the application module needs to access the remote data via network communication, thus the efficiency for reading data by the application module will be affected, the network load will be increased, and the performance of the working system will be affected.

In the prior art, to improve the efficiency for reading data and alleviate the network load, if the application module needs to use certain remote data frequently, it subscribes to the remote data and stores these remote data in a hardware device in which the application module exists, and then synchronizes the stored data with the remote data via a subscription/notification mechanism; in other words, the application module subscribes to the remote data from a data manager in the remote hardware device and stores the remote data in a data buffer in the hardware device in which the application module exists, thus the application module does not need to repeatedly access the data source of the remote data. When the subscribed remote data change, the data manager in the remote hardware device sends the changed data to the application module that subscribes to the data, so that the corresponding stored data will be updated, and the stored data will be synchronized with the remote data.

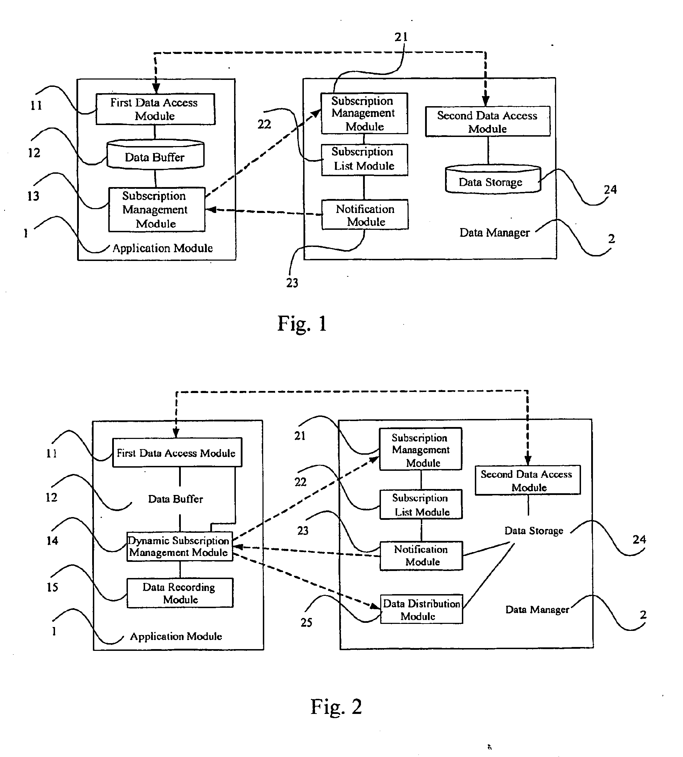

By using such a method, accessing the locally stored data by the application module is like accessing the remote data, thus the network load can be alleviated relatively, and the performance of the software working system can be improved. Referring to Figure 1, it is a schematic diagram illustrating a structure of a specific distributed data management system which stores the remote data and synchronizes the stored data with the remote data via a subscription/notification mechanism in the prior art. In Figure 1, a subscription management module 13 in the application module 1 sends subscription request information for subscribing to a certain category of data to a subscription management module 21 in a remote data manager 2 via the network, and the subscription management module 21 saves the received subscription request in a subscription list module 22. A notification module 23 extracts the data to which the application module 1 subscribes from a data storage according to the subscription request information in the subscription list module 22, and sends the data to the subscription management module 13. The subscription management module 13 saves the data in a data buffer 12, so that the application module 1 may access the stored data via a first data access module 11. When the subscribed data in the data storage 24 change, the notification module 23 detects the subscription list module 22, searches for the subscriber of the data according to the subscription request information saved in the subscription list module 22, and sends the changed data to the subscriber, thus the stored data of the subscriber is updated. For example, if the application module 1 has subscribed to the changed remote data, the notification module 23 sends the changed data to the subscription management module 13, and the subscription management module 13 updates the corresponding data in the data buffer 12 with the changed data, thus the stored data in the data buffer 12 can be synchronized with the data in remote data storage 24.

As described above, in the prior art, although synchronization of the stored data with the corresponding remote data is realized by storing the remote data in a hardware device in which the application module exists, but the subscription for the remote data by the application module is rather rough. Usually, the application module roughly subscribes to one category of data, for example, the data of category "school" in the data storage is subscribed. But in practical application, the application module only needs to use part of the data in the category, for example, it only needs to access the data of Elementary School A in the category "school". For other data in the category that will not be accessed, such as the data of other schools except Elementary School A, when change of the data occurs, the notification module also updates them via network communication ceaselessly. At the same time, the application module of the prior art subscribes to the remote data by means of a static subscription mode. In other words, the application module only needs to use certain data in a certain time period, and after the time period, the data will no longer be used, but after subscribing to the data, the application module cannot dynamically cancel the subscription in time. As a result, when change occurs on the remote data that is not needed by the application module,'the notification module still updates the data via network communication ceaselessly, and the working system still processes the data ceaselessly. Therefore, due to the transmitting and processing for the unnecessary data, the network load will be increased, and the overall performance of the working system will be lowered. The U.S. Patent 6,334,178 relates to a multiprocessing system in which hierarchically superior configuration managers maintain various profiles of reference characteristics to which subordinate managed units selectively subscribe. Whenever the profiles or their constituent reference characteristics change, the configuration managers automatically propagate the changes down to all managed units. The U.S. Patent Publication No. US2005/0129010 discloses a communications terminal having a communication section for communicating with a server via a communication network, a storage section for storing a program, a control section for controlling the communication section and storage section, and a usage storage section for storing the usage status of the communications terminal, and a program stored in the storage section is updated in accordance with the usage status stored in the usage storage section.

### Summary of the Invention

The embodiment of the invention provides a distributed data management system and a method for dynamically subscribing to data by the distributed data management system. By using the system, distributed data may be subscribed to accurately. At the same time, the subscribed data may be managed dynamically and the subscription of the data with low frequency of use may be cancelled in time, so as to avoid the frequent updating of the data with low frequency of use. Therefore, the traffic transmitted by the network and processed by the system can be reduced effectively, so that the performance of the system can be improved.

The embodiment of the invention is implemented by means of the following technical solutions.

A distributed data management system, comprising an application module (1) and a data manager (2), wherein: a first data access module (11) and a data buffer (12) are set in the application module (1), and a subscription management module (21), a subscription list module (22), a notification module (23) and a data storage (24) are set in the data manager (2).

The application module (1) further includes:
a dynamic subscription management module (14), which is in physical connection with or in communication with the data buffer (12), a data recording module (15) and the first data access module (11) respectively, for subscribing to remote data and deleting subscription to the remote data with a use frequency smaller than a defined threshold;
the data recording module (15), for recording the use information of the remote data;
The data manager (2) further includes:
a data publication module (25), which is in physical connection with or in communication with the data storage (24), for reading and analyzing the data in the data storage (24) and saving description information of the data that is obtained via by describing in classification the data in the data manager according to data type and data attribute.

The dynamic subscription management module (14), which is in communication with the subscription management module (21), the notification module (23) and the data publication module (25) respectively, is adapted to query the description information saved in the data publication module (25), construct subscription request information and send it to the subscription management module (21), and receive the subscribed data sent from the notification module (23).

According to an embodiment, there is more than one application module (1).

According to an embodiment, the dynamic subscription management module (14) and the data recording module (15) are set integrally.

A method for subscribing to remote data using the distributed data management system described above includes the following steps.

A subscribing end constructs and sends subscription request information that includes a detailed subscription condition according to the data to be subscribed to.

An apparatus that receives the subscription request information extracts the data to be subscribed to according to the subscription request information and sends the data to the subscribing end.

The subscribing end dynamically manages the data obtained, and deletes subscription to the data with a use frequency smaller than a defined threshold in time.

According to an embodiment, the method described above specifically includes the following steps.

The subscribing end queries data description information according to a data subscription requirement that is preset, and determines the data to be subscribed to according to the description information.

The subscribing end constructs, saves and sends the subscription request information of the data according to the data to be subscribed to.

The apparatus that receives the subscription request information reads and analyzes the subscription request information, and obtains the data to be subscribed to, thus extracts the data to be subscribed to and sends the data to the subscribing end.

According to an embodiment, the data description information is obtained by describing in classification the data in the data storage (24) according to data type and data attribute.

According to an embodiment, when the data in the data storage (24) change, the method further includes the following steps.

The changed data is described in classification according to the data type and data attribute.

Whether the changed data is subscribed to is to be determined, if the changed data is subscribed to, they are sent to the subscribing end; otherwise, the data will not be sent.

According to an embodiment, after it is determined that the changed data is subscribed to, the method further includes the following steps.

Whether current time is before a time represented by a validity period for subscribing to the data is to be determined, if yes, the changed data will be sent to the subscribing end; otherwise, the data will not be sent.

According to an embodiment, after it is determined that the changed data is subscribed to, the method further includes the following steps.

Whether number of the changed data is smaller than the data volume of the subscribed data is to be determined, if yes, the changed data will be sent to the subscribing end; otherwise, the data will not be sent.

According to an embodiment, the method for constructing the subscription request information of the data to be subscribed to includes the following steps.

The subscription request information is constructed using basic element and relation operator; or
the subscription request information is constructed using basic element, relation operator and logical operator.

According to an embodiment, the subscription request information includes:
the data to be subscribed to and the data subscription condition; and/or
information of data subscription validity period, data subscription range, and/or the data volume allowed for the subscription.

According to an embodiment, the subscription request information that is saved includes:
the data to be subscribed to and/or the data subscription condition.

The method for sending subscription request information includes the following step.

According to an embodiment, the subscription request information is sent by using TCP/IP (Transmission Control Protocol/Internet Protocol), HTTP (Hypertext Transfer Protocol) or SOAP (Simple Object Access Protocol).

According to an embodiment, the method for sending the data to be subscribed to includes the following step.

The data to be subscribed to is sent using XML (Extensible Markup Language).

According to an embodiment, the method for dynamically managing the data includes the following steps.

The number of use times of the obtained data is recorded; and the number of use times that is recorded is compared with a predefined threshold, if the number of use times that is recorded is smaller than the threshold, the subscription to the obtained data will be deleted.

According to an embodiment, before the subscription to the obtained data is deleted, the method further includes the following step.

The value of the number of use times of each subscribed data is reset as 0.

It can be seen from the above technical solutions of the invention that: in the embodiment of the present invention, a data publication module is used to describe data information in a data storage in detail, so that the application module may know the detailed information of the remote data, and the remote data may be subscribed to accurately, and the unnecessary data may be prevented from being subscribed to. At the same time, the embodiment of the invention further employs a dynamic subscription management module to monitor the use of the remote data that is subscribed to, and to cancel the subscription of remote data with low frequency of use, so that such data may be prevented from being updated frequently when change occurs. Therefore, by the embodiment of the invention, the volume of data transmitted by the network and processed by the system can be reduced effectively, the network load may be alleviated, and the working performance of the system may be improved.

### Brief Description of the Drawings

Figure 1 is a schematic diagram illustrating the structure for a device of the distributed data management system in the prior art;
Figure 2 is a schematic diagram illustrating the structure for a device of the distributed data management system according to one embodiment of the invention;
Figure 3 is a flow chart of a process for subscribing to remote data via the system shown in Figure 2 according to one embodiment of the invention;
Figure 4 is a flow chart of the process for dynamically managing stored data via the system shown in Figure 2 according to one embodiment of the invention;
Figure 5 is a flow chart of a process for updating stored data via the system shown in Figure 2 according to one embodiment of the invention;
Figure 6 is a flow chart of a process for updating stored data via the system shown in Figure 2 according to another embodiment of the invention.

### Detailed Description of the Embodiments

Referring to Figure 2, it is a schematic diagram illustrating a specific structure of a distributed data management system according to an embodiment of the invention. It can be seen from Figure 2 that the system at least includes an application module 1 and a data manager 2. In a more complex situation, the system may have a plurality of application modules and data managers.

A first data access module 11 and a data buffer 12 are set in the application module 1. In addition, a dynamic subscription management module 14 and a data recording module 15 are further set in the application module 1. The dynamic subscription management module 14 is in physical connection with or in communication with the data buffer 12, the data recording module 15 and the first data access module 11 respectively. The dynamic subscription management module 14 may subscribe to data request information accurately from the remote data manager 2 according to requirement of the application module 1, and may cancel the subscription of the remote data with low frequency of use, so that the unnecessary remote data may be prevented from being processed. The data recording module 15 assists the dynamic subscription management module 14 in dynamically subscribing to the remote data to record the state of use of the subscribed data, so that the dynamic subscription management module 14 may know the state of using the subscribed data. The data recording module 15 may be set independently, or it may be set with the dynamic subscription management module 14 integrally.

A subscription management module 21, a subscription list module 22, a notification module 23 and a data storage 24 are set in the data manager 2. In addition, a data publication module 25 is further set in the data manager 2, which is in physical connection with or in communication with the data storage 24, for reading and analyzing the data in the data storage 24 and saving description information of the data that is obtained via analysis. The data publication module 25 may describe the data in the data storage 24 in detail, so that the application module 1 may subscribe to the data needed more accurately, and working performance of the system may be prevented from being decreased due to the processing of unnecessary data. In the distributed data management system, the dynamic subscription management module 14 is in communication with the subscription management module 21, the notification module 23 and the data publication module 25 respectively, obtaining data information in the data storage 24 from the data publication module 25, sending subscription request information to the subscription management module 21 and receiving updated data sent by the notification module.

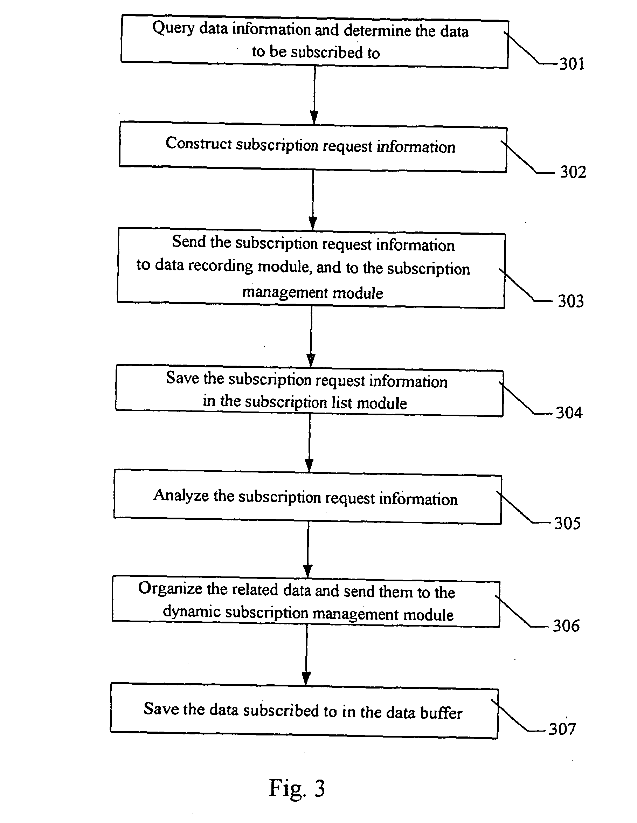

Referring to Figure 3, it shows a specific process for dynamically subscribing to data via the system shown in Figure 2 according to an embodiment of the invention, which includes the following steps.
Step 301: The dynamic subscription management module 14 queries the description information of data in the data storage 24 that is saved in the data publication module 25 according to the preset data subscription requirement, and determines the data to be subscribed to according to the description information. The following Table 1 shows a specific example in which the description information saved in the data publication module 25 is queried. If the application module 1 is interested in Elementary School A and Company C in Beijing after querying the description information shown in the table, it may decide to subscribe to the related data of these two units.

**Table 1**

| District | Number | Name | Location | number of people |
|---|---|---|---|---|
| Beijing | 10001 | Elementary School A | Street A | 400 |
| Beijing | 10002 | Elementary School B | Street B | 200 |
| Beijing | 20003 | Company C | Street C | 280 |
| Tianjin | 30004 | Company D | Street D | 320 |

Step 302: The dynamic subscription management module 14 constructs subscription request information according to the subscription requirement of the application module 1. The subscription request information may be represented via an expression which may be defined by basic elements, including data type, data attribute and data attribute value, and relation operators, such as =, >, <, >= or <=, or may be further defined in conjunction with logical operator "and" or "or" field. Subscription request information, such as "district=Beijing and number of people > 300" or "location=Street A" and "number of people = 280" or "location=Street C", is constructed according to the subscription requirement in Step 301 that the application module 1 decides to subscribe to the related data of Elementary School A and Company C.
The subscription request information indicates that only the related data of Elementary School A in schools and Company C is subscribed to. In comparison with the prior art in which data of category "school" is simply indicated to be subscribed to but only the data of Elementary School A is used, or data of category "company" is simply indicated to be subscribed to but only the data of Company C is used, the subscription is more precise. Therefore, it is avoided that the volume of data transmitted by the network and processed by the system is increased because other unnecessary data, such as the data of Elementary School B and Company D, is subscribed to, so that the network load may be alleviated, and the performance of the system may be improved.
When constructing the subscription request information, the dynamic subscription management module 14 may add an extended field to the subscription request information. The extended field may indicate the data subscription validity period, data subscription range or the data volume allowed for the subscription, or, it may indicate such information at the same time, for illustrating the requirements of the application module 1 on the remote data that is subscribed to, so that the subscription will be more precise and flexible, and the extracting and processing of unnecessary data may be further avoided, thus the performance of the system will be improved.
Step 303: The dynamic subscription management module 14 saves the related subscription information, including "the subscribed data" and "the data subscription condition", in the data recording module 15 according to the subscription request information. In the data recording module 15, "the number of use times" is set behind each category of the subscribed data, for displaying the state of use of each category of data that is subscribed to by the application module 1. At the same time, subscription request information of "district=Beijing and number of people>300" and "location=Street C" is sent to the subscription management module 21.
The dynamic subscription management module 14 may employ a transmission protocol such as TCP/IP (Transmission Control Protocol/Internet Protocol) to send the subscription request information; or, it may employ HTTP (Hypertext Transfer Protocol) or SOAP (Simple Object Access Protocol) and so on to send the subscription request information.
The format of the data recording module 15 is as shown in the following Table 2, which is an example of data recording module 15:

**Table 2**

| Subscribed | Data Subscription | Number of Use |
|---|---|---|
| Data | Condition | Times |
| Elementary School A | district=Beijing and number of people>300 | 128 |
| Company C | number of people = 280 | 28 |

Step 304: The subscription management module 21 saves the subscription request information in the subscription list module 22;
Step 305: Notification module 23 reads the subscription request information of "district=Beijing and number of people>300" and "number of people=280" from the subscription list module 22, and acquires that the dynamic subscription management module wants to subscribe to the related data of Elementary School A and Company C by analyzing the subscription request information;
Step 306: The notification module 23 searches for and extracts the related data of Elementary School A and Company C from the data storage 24, and then sends the data to the dynamic subscription management module 14. Here, XML (Extensible Markup Language) may be employed to send the subscribed data;
Step 307: The dynamic subscription management module 14 saves the related data of Elementary School A and Company C in the data buffer 12 via the first data access module 11.

The above technical solution further includes the following steps.

The data publication module 25 reads and analyzes the data in the data storage 24, and describes in classification the data in detail according to the data type such as "school" and "company" and the data attribute including "District", "Specific Location", "Number", "Name" and "Number of people", and then saves the description information. When the structure of the data in the data storage 24 is changed, or the data is updated, or new data is added to the data storage 24, the data publication module 25 rereads the new data in data storage 24, describes in classification the data in detail according to the data type and data attribute, and further updates the description information in the data publication module 25 according to the result of description in classification.

Table 1 shows the specific description information saved in the data publication module 25. It can be seen from Table 1 that the data publication module 25 describes the data in the data storage 24 in detail, so that the application module 1 may subscribe to the data needed more accurately, for example, the application module 1 may subscribe to the data of Elementary School A in Beijing, unlike the prior art, i.e. only data of category "school" can be subscribed to roughly in order to obtain the data of Elementary School A, thus unnecessary data of Elementary School B will also be subscribed to. As a result, the network load may be prevented from being increased due to the processing and transmitting of unnecessary data, and the working performance of the system may be prevented from being decreased.

Of course, if the application module 1 needs to subscribe to a complete category of data, such as the data of category "school", its subscription request information may simply instruct to subscribe to the data of "school" in this category. At this point, the "Subscribed Data" is a name in this category, school, while "Data Subscription Condition" of "district=Beijing and number of people>300" or "location=Street A" is null. Correspondingly, the record of "data subscription condition" of the subscribed data in the data recording module 15 is null, too. Therefore, the capacity of the data recording module 15 and the subscription list module 22 may be reduced, and the processing speed of the data recording module 15 may be improved, so that the working performance of the system can be improved.

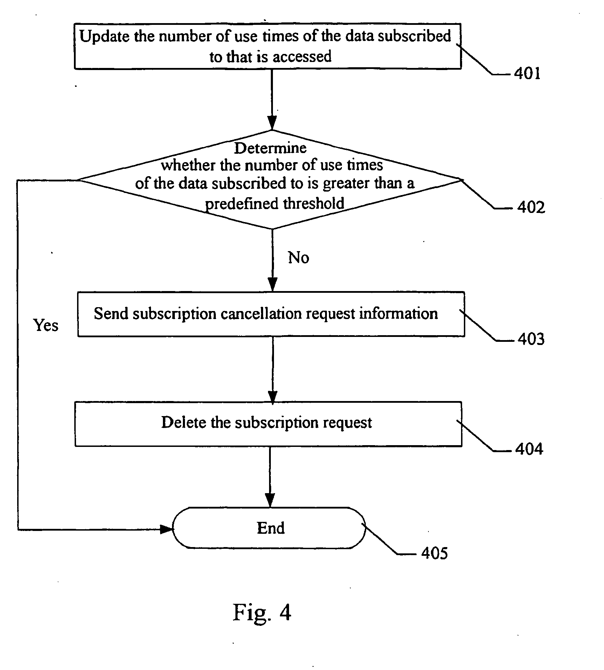

Referring to Figure 4, it shows a specific process for dynamically managing stored data via the system shown in Figure 2 according to an embodiment of the invention, which has the following steps.
Step 401: When the first data access module 11 accesses the stored data in the data buffer 12, such as the related data of Elementary School A, the dynamic subscription management module 14 acquires, by scanning the first data access module 11, that the stored data is accessed, so it updates the number of use times of the subscribed data that is accessed, which is recorded in the data recording module 15, such as the related data of Elementary School A;
Step 402: The dynamic subscription management module 14 scans the data recording module 15, and determines whether the number of use times of each subscribed data recorded in the data recording module 15 is greater than a predefined threshold respectively, if yes, it turns to Step 405; otherwise, it turns to Step 403. If the defined threshold of the number of use times is 100, it respectively determines whether the numbers of use times of the data of Elementary School A and the data of Company C recorded in the data recording module 15 are greater than 100, if the numbers of use times of the data of Elementary School A and the data of Company C are as shown in Table 2, because the number of use times of the data of Elementary School A is greater than 100, it turns to Step 405; while the number of use times of the data of Company C is smaller than 100, it turns to Step 403;
   In this step, for the scanning of the data recording module 15 by the dynamic subscription management module 14, the data recording module 15 may be scanned at any moment as required by the application module 1, or it may be scanned periodically according to the setting by the application module 1, such as one hour, one day, one month or one year. Thus, the dynamic subscription management module 14 may clearly know which data is of high use frequency and which data is of low use frequency in the subscribed data, so that it is easy for application module 1 to decide whether to continue to subscribe to each data.
Step 403: The dynamic subscription management module 14 sends subscription cancellation request information to the subscription management module 21 for cancelling the subscribed data of which the number of use times is smaller than the threshold, such as the data of Company C;
Step 404: The subscription management module 21 deletes the subscription request information of the subscribed data that the number of use times is smaller than the threshold, such as the data of Company C, from subscription list module 22, according to the subscription cancellation request information;
   Because certain stored data is of low frequency of use, in other words, the number of times that the stored data is used is relatively small in a time period, the subscription of the data is cancelled. For example, the frequency of use of the data of Company C is low, the subscription of the data of Company C will be cancelled, so that it may be avoided that the notification module 23 extracts and sends the data ceaselessly when the data in remote data manager 2 changes frequently thereafter, and that the application module 1 processes the data ceaselessly. Therefore, the data volume transmitted by the network may be reduced, the network load may be alleviated, and at the same time, the data volume extracted and sent by the data manager 2 and processed by the application module 1 may be decreased, so that the performance of the system may be improved. However, if there is a need by the application module, the remote data can be accessed via the "first data access module" in the application module and the "second data access module" in the remote data manager. Because the frequency of use of the remote data is low, in comparison with the case in which the stored data corresponding to the remote data is updated frequently, the network load may be alleviated and the performance of the system may be improved.
Step 405: End.
   Between Step 403 and Step 404, the number of use times of each subscribed data recorded in the data recording module 15 may be reset as 0. Thus, every time the dynamic subscription management module 14 periodically scans the data recording module 15, the threshold standard that is referred to will be the same, without being changed ceaselessly.

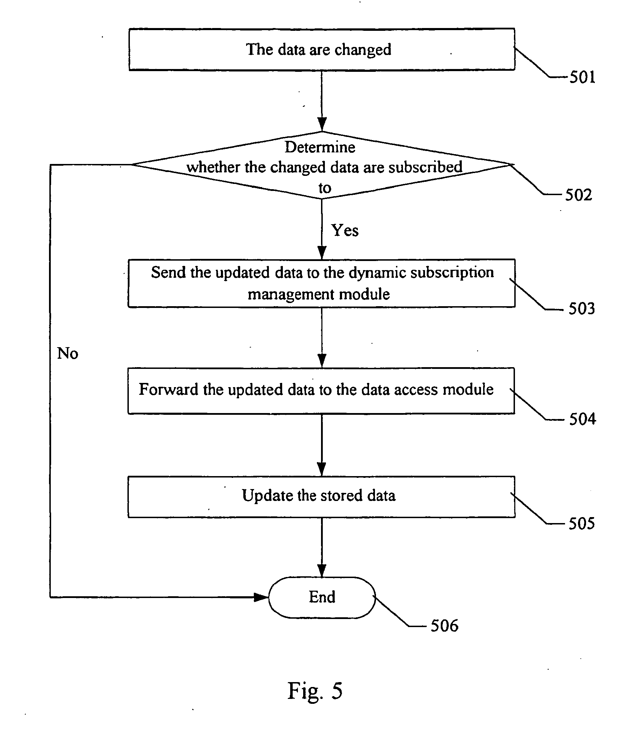

Due to the relevance between devices in the software working system, the application module may update the data in the remote data manager via network communication. After the data in the data manager is updated, to guarantee the consistence of data in the whole software working system, the remote data stored in each application module need to be updated. Referring to Figure 5, it shows a specific process for updating the stored data via the system shown in Figure 2 according to an embodiment of the invention, which has the following steps.
Step 501: The data of Elementary School A and part of the data of Company C in the data storage 24 are changed;
Step 502: The notification module 23 acquires that the data of Elementary School A and part of the data of Company C in data storage 24 have been changed, and analyzes the subscription request information stored in the subscription list module 22, and then determines whether the data of Elementary School A and the data of Company C are subscribed to by the application module 1, if.yes, it turns to Step 503; otherwise, it turns to Step 506. As described in the above Steps 403-405, because the number of use times of the data of Elementary School A is greater than the defined threshold, its subscription request information is still kept in the subscription list module 22, in other words, the data of Elementary School A is still subscribed to by the application module 1, so it turns to Step 503. However, because the number of use times of the data of Company C is smaller than the defined threshold, its subscription request information is deleted from the subscription list module 22, in other words, the data of Company C is not subscribed to by application module 1 any more, so it turns to Step 506;
Step 503: The notification module 23 sends the changed data in the data of Elementary School A to the dynamic subscription management module 14. Here, the subscribed data may be sent in a message in a certain format (such as XML); Step 504: The dynamic subscription management module 14 sends the changed data in the data of Elementary School A to the first data access module 11;
Step 505: The first data access module 11 updates the corresponding data in the data buffer 12 using the changed data in the data of Elementary School A;
Step 506: End.

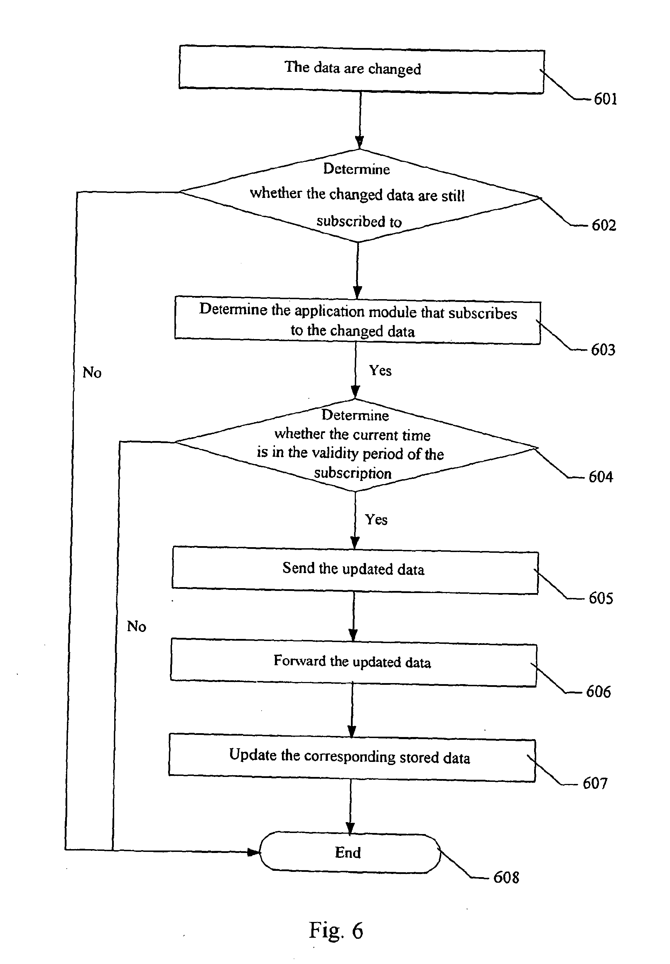

When the application module 1 subscribes to the remote data, extended field information may also be added to the subscription request information when the subscription request information is sent. At this point, when the remote data that is subscribed to by the application module 1 change and the notification module 23 updates the stored data in the application module 1, the requirement of the extended field information in the subscription request information also needs to be considered. For example, it is supposed that when the dynamic subscription management module 14 constructs the request information for subscribing to the data of Elementary School A, an extended field, which indicates that the validity period for subscribing to the information is Oct.1, 2006, is added. Then, before the notification module 23 updates the stored data of Elementary School A in the application module 1, it should further determine whether the updating time is before Oct.1, 2006. Figure 6 shows the specific process for updating the stored data via the system shown in Figure 2 according to an embodiment of the invention, which has the following steps:
Step 601: The data of Elementary School A and part of the data of Company C in the data storage 24 are changed;
Step 602: The notification module 23 acquires that the data of Elementary School A and part of the data of Company C in the data storage 24 have been changed, analyzes the subscription request information stored in the subscription list module 22, and determines whether the data of Elementary School A and the data of Company C are subscribed to, if yes, it turns to Step 603; otherwise, it turns to Step 608. As described in the above Steps 403-405, because the number of use times of the data of Elementary School A is greater than the defined threshold, its subscription request information is still kept in the subscription list module 22, in other words, the data of Elementary School A is still subscribed to, so it turns to Step 603; however, because the number of use times of the data of Company C is smaller than the defined threshold, its subscription request information is deleted from the subscription list module 22, in other words, the data of Company C is not subscribed to any more, so it turns to Step 608;
Step 603: An application module that subscribes to the data of Elementary School A is determined. The application module that subscribes to the data of Elementary School A may be the application module 1, or other application modules, but principles for updating the stored data are the same. For convenience, it is supposed that the application module that subscribes to the data of Elementary School A is the application module 1. If a plurality of application modules subscribe to the data of Elementary School A at the same time, the following process is applicable for each of the application modules.
Step 604: The notification module 23 checks the validity period of the subscribed data of Elementary School A that is recorded in the subscription list module 22, and determines whether the current time is before the time prescribed by the validity period, if yes, it indicates that the application module 1 still subscribes to the data of Elementary School A at present, and it turns to Step 605; otherwise, it indicates that the subscription of the data of Elementary School A is expired, and the data do not need to be subscribed to any more, thus it turns to Step 608;
Step 605: The notification module 23 sends the changed data in the data of Elementary School A to the dynamic subscription management module 14. Here, the subscribed data may be sent in a message with a certain format (such as XML);
Step 606: The dynamic subscription management module 14 sends the changed data in the data of Elementary School A to the first data access module 11;
Step 607: The first data access module 11 updates the corresponding data in the data buffer 12 using the changed data in the data of Elementary School A;
Step 608: End.
   If the extended field information added to the subscription request information that is sent to the remote data manager 2 by the application module 1 is "capacity" that represents the volume of the subscribed data, such as "the data volume allowed for the subscription every time is 2M", when the notification module 23 extracts the subscribed data, if the volume of the data that meets the requirement is smaller than 2M, all the data that meets the requirement will be selected; otherwise, only 2M of the data that meets the requirement will be selected. Correspondingly, when the data is updated subsequently, the notification module 23 first needs to check whether the volume of the changed data is greater than 2M, if it is smaller than 2M, the changed data that meets the requirement will be sent to the dynamic subscription management module 14; otherwise, only 2M of the changed data that meets the requirement will be sent to the dynamic subscription management module 14.
   Additional advantages and modifications will readily occur to those skilled in the art. Therefore, the invention in its broader aspects is not limited to the specific details and representative embodiments shown and described herein. Accordingly, various modifications and variations may be made without departing from scope of the invention as defined by the appended claims and their equivalents.

## Claims

1. A distributed data management system,
comprising an application module (1) and a data manager (2), wherein a first data access module (11) and a data buffer (12) are set in the application module (1), and a subscription management module (21), a subscription list module (22), a notification module (23) and a data storage (24) are set in the data manager (2),
wherein the application module (1) further comprises:
a dynamic subscription management module (14), which is in physical connection with or in communication with the data buffer (12), a data recording module (15) and the first data access module (11) respectively, adapted to subscribe to remote data, and delete subscription to the remote data with a use frequency smaller than a defined threshold; and
the data recording module (15), for recording the use information of the remote data, and **characterized by**:
the data manager (2) further comprising
a data publication module (25), which is in physical connection with or in communication with the data storage (24), adapted to read and analyze the data in data storage (24) and save description information of the data that is obtained by describing in classification the data in the data manager according to data type and data attribute, and
wherein the dynamic subscription management module (14), which is in communication with the subscription management module (21), the notification module (23) and the data publication module (25) respectively, is adapted to query the description information saved in the data publication module (25), construct subscription request information and send it to the subscription management module (21), and receive the subscribed data sent from the notification module (23).

2. The distributed data management system of claim 1, **characterized in that** the dynamic subscription management module (14) and the data recording module (15) are integrated in one module.

3. A method for subscribing to remote data comprising:
constructing and sending, by a subscribing end, subscription request information that comprises a detailed subscription condition;
extracting, by an data manager, the data to be subscribed to according to the subscription request information, and sending the data to the subscribing end; and
managing, by the subscribing end, the data obtained, and deleting subscription to the data with a use frequency smaller than a defined threshold,
wherein constructing and sending subscription request information that comprises a detailed subscription condition comprises:
querying description information of the data according to a data subscription requirement that is preset, and determining the data to be subscribed to according to the description information; and
constructing, saving and sending the subscription request information of the data according to the data to be subscribed to,
wherein the description information of the data is obtained by describing in classification the data in the data manager according to data type and data attribute.

4. The method of claim 3, **characterized by** further comprising:
when the data in the data manager is changed,
describing in classification the changed data according to the data type and data attribute;
determining whether the changed data is subscribed to, if the changed data is subscribed to, sending the changed data to the subscribing end.

5. The method of claim 4, **characterized by** further comprising:
after it is determined that the changed data is subscribed to,
determining whether current time is before a time represented by a validity period for subscribing the data, if yes, sending the changed data to the subscribing end.

6. The method of claim 4, **characterized by** further comprising:
after it is determined that the changed data is subscribed to,
determining whether number of the changed data is smaller than the data volume of the subscribed data, if yes, sending the changed data to the subscribing end.

7. The method of claim 3, **characterized in that** the constructing the subscription request information of the data to be subscribed to comprises:
constructing the subscription request information using basic element and relation operator; or
constructing the subscription request information using basic element, relation operator and logical operator.

8. The method of claim 3, **characterized in that** the subscription request information comprises:
the data to be subscribed to and the data subscription condition, information of data subscription validity period, data subscription range, or the data volume allowed for the subscription.

9. The method of claim 8, **characterized in that** the subscription request information that is saved comprises:
the data to be subscribed to, or the data subscription condition.

10. The method of claim 3, **characterized in that** the sending subscription request information comprises:
sending the subscription request information by using TCP/IP (Transmission Control Protocol/Internet Protocol), HTTP (Hypertext Transfer Protocol) or SOAP (Simple Object Access Protocol).

11. The method of claim 3, **characterized in that** the sending the data to be subscribed to comprises:
the data to be subscribed to is sent using XML (Extensible Markup Language).

12. The method of claim 3, **characterized in that** the managing the data obtained and deleting the subscription to the data with the use frequency smaller than the defined threshold comprises:
recording the number of use times of the obtained data; and
comparing the recorded number of use times with a predefined threshold, if the number of use times that is recorded is smaller than the threshold, deleting the subscription to the obtained data.

13. The method of claim 12, **characterized in that** the managing remote data further comprises: before the subscription to the obtained data is deleted,
resetting the value of the number of use times of each subscribed data as 0.

## Patentansprüche

1. Verteiltes Datenverwaltungssystem, umfassend: ein Anwendungsmodul (1) und einen Datenmanager (2), wobei ein erstes Datenzugriffsmodul (11) und ein Datenpuffer (12) in dem Anwendungsmodul (1) angeordnet sind, und ein Subskriptions-Verwaltungsmodul (21), ein Subskriptions-Listenmodul (22), ein Benachrichtigungsmodul (23) und ein Datenspeicher (24) in dem Datenmanager (2) angeordnet sind,
wobei das Anwendungsmodul (1) ferner Folgendes umfasst:
ein dynamisches Subskriptions-Verwaltungsmodul (14), das sich in physischer Verbindung oder in Kommunikation mit dem Datenpuffer (12), einem Datenaufzeichnungsmodul (15) bzw. dem ersten Datenzugriffsmodul (11) befindet, das dafür ausgelegt ist, entfernte Daten zu subskribieren und die Subskription der entfernten Daten bei einer Benutzungshäufigkeit von weniger als einer definierten Schwelle zu löschen; und
das Datenaufzeichnungsmodul (15) zum Aufzeichnen der Benutzungsinformationen der entfernten Daten, und **dadurch gekennzeichnet, dass**
der Datenmanager (2) ferner Folgendes umfasst:
ein Datenpublikationsmodul (25), das sich in physischer Verbindung oder in Kommunikation mit dem Datenspeicher (24) befindet und dafür ausgelegt ist, die Daten in dem Datenspeicher (24) zu lesen und zu analysieren und Beschreibungsinformationen der Daten, die durch Beschreiben in der Klassifikation der Daten in dem Datenmanager gemäß Datentyp und Datenattribut erhalten werden, abzuspeichern, und
wobei das dynamische Subskriptions-Verwaltungsmodul (14), das sich in Kommunikation mit dem Subskriptions-Verwaltungsmodul (21), dem Benachrichtigungsmodul (23) bzw. dem Datenpublikationsmodul (25) befindet, dafür ausgelegt ist, die in dem Datenpublikationsmodul (25) abgespeicherten Beschreibungsinformationen abzufragen, Subskriptions-Anforderungsinformationen zu konstruieren und diese zu dem Subskriptions-Verwaltungsmodul (21) zu senden und die von dem Benachrichtigungsmodul (23) gesendeten subskribierten Daten zu empfangen.

2. Verteiltes Datenverwaltungssystem nach Anspruch 1, **dadurch gekennzeichnet, dass** das dynamische Subskriptions-Verwaltungsmodul (14) und das Datenaufzeichnungsmodul (15) in einem Modul integriert sind.

3. Verfahren zum Subskribieren von entfernten Daten, mit den folgenden Schritten:
Konstruieren und Senden von Subskriptions-Anforderungsinformationen, die eine detaillierte Subskriptionsbedingung umfassen, durch ein subskribierendes Ende;
Extrahieren der zu subskribierenden Daten durch einen Datenmanager gemäß den Subskriptions-Anforderungsinformationen und Senden der Daten zu dem subskribierenden Ende; und
Verwalten der erhaltenen Daten durch das subskribierende Ende und Löschen der Subskription der Daten bei einer Benutzungshäufigkeit von weniger als einer definierten Schwelle,
wobei das Konstruieren und Senden von Subskriptions-Anforderungsinformationen,
die eine detaillierte Subskriptionsbedingung umfassen, Folgendes umfasst:
Abfragen von Beschreibungsinformationen der Daten gemäß einer voreingestellten Datensubskriptionsanforderung und Bestimmen der zu subskribierenden Daten gemäß den Beschreibungsinformationen; und
Konstruieren, Abspeichern und Senden der Subskriptions-Anforderungsinformationen der Daten gemäß den zu subskribierenden Daten, wobei die Beschreibungsinformationen der Daten durch Beschreiben in der Klassifikation der Daten in dem Datenmanager gemäß Datentyp und Datenattribut erhalten werden.

4. Verfahren nach Anspruch 3, **dadurch gekennzeichnet, dass** es ferner die folgenden Schritte umfasst: wenn die Daten in dem Datenmanger geändert werden, Beschreiben bei der Klassifikation der geänderten Daten gemäß dem Datentyp und Datenattribut;
Bestimmen, ob die geänderten Daten subskribiert sind, und wenn die geänderten Daten subskribiert sind, Senden der geänderten Daten zu dem subskribierenden Ende.

5. Verfahren nach Anspruch 4, **dadurch gekennzeichnet, dass** es ferner Folgendes umfasst: nachdem bestimmt wird, dass die geänderten Daten subskribiert sind, Bestimmen, ob die aktuelle Zeit vor einer durch eine Validitätsperiode zum Subskribieren der Daten repräsentierten Zeit ist, wenn ja, Senden der geänderten Daten zu dem subskribierenden Ende.

6. Verfahren nach Anspruch 4, **dadurch gekennzeichnet, dass** es ferner Folgendes umfasst: nachdem bestimmt wird, dass die geänderten Daten subskribiert sind, Bestimmen, ob die Anzahl der geänderten Daten kleiner als das Datenvolumen der subskribierten Daten ist, wenn ja, Senden der geänderten Daten zu dem subskribierenden Ende.

7. Verfahren nach Anspruch 3, **dadurch gekennzeichnet, dass** das Konstruieren der Subskriptions-Anforderungsinformationen der zu subskribierenden Daten Folgendes umfasst:
Konstruieren der Subskriptions-Anforderungsinformationen unter Verwendung von Grundelement und Relationsoperator; oder
Konstruieren der Subskriptions-Anforderungsinformationen unter Verwendung von Grundelement, Relationsoperator und logischem Operator.

8. Verfahren nach Anspruch 3, **dadurch gekennzeichnet, dass** die Subskriptions-Anforderungsinformationen Folgendes umfassen:
die zu subskribierenden Daten und die Datensubskriptionsbedingung, Informationen der Datensubskriptions-Validitätsperiode, Datensubskriptionsbereich oder das zulässige Datenvolumen für die Subskription.

9. Verfahren nach Anspruch 8, **dadurch gekennzeichnet, dass** die Subskriptions-Anforderungsinformationen, die abgespeichert werden, Folgendes umfassen:
die zu subskribierenden Daten oder die Datensubskriptionsbedingung.

10. Verfahren nach Anspruch 3, **dadurch gekennzeichnet, dass** das Senden von Subskriptions-Anforderungsinfonnationen Folgendes umfasst:
Senden der Subskriptions-Anforderungsinformationen durch Verwendung von TCP/IP (Transmission Control Protocol/Internet Protocol), HTTP (Hypertext Transfer Protocol) oder SOAP (Simple Object Access Protocol).

11. Verfahren nach Anspruch 3, **dadurch gekennzeichnet, dass** das Senden der zu subskribierenden Daten Folgendes umfasst:
die zu subskribierenden Daten werden unter Verwendung von XML (Extensible Markup Language) gesendet.

12. Verfahren nach Anspruch 3, **dadurch gekennzeichnet, dass** das Verwalten der erhaltenen Daten und das Löschen der Subskription der Daten bei einer Benutzungshäufigkeit von weniger als der definierten Schwelle Folgendes umfasst:
Aufzeichnen der Anzahl von Benutzungsmalen der erhaltenen Daten; und
Vergleichen der aufgezeichneten Anzahl von Benutzungsmalen mit einer vordefinierten Schwelle, wenn die Anzahl der Benutzungsmale, die aufgezeichnet wird, kleiner als die Schwelle ist, Löschen der Subskription der erhaltenen Daten.

13. Verfahren nach Anspruch 12, **dadurch gekennzeichnet, dass** das Verwalten entfernter Daten ferner Folgendes umfasst: bevor die Subskription der erhaltenen Daten gelöscht wird,
Rücksetzen des Werts der Anzahl von Benutzungsmalen aller subskribierten Daten als 0.

## Revendications

1. Système de gestion distribuée de données, comprenant un module d'application (1) et un gestionnaire de données (2), dans lequel un premier module d'accès aux données (11) et un tampon de données (12) sont définis dans le module d'application (1), et un module de gestion d'abonnement (21), un module de liste d'abonnements (22), un module de notification (23) et une unité de stockage de données (24) sont définis dans le gestionnaire de données (2),
dans lequel le module d'application (1) comprend en outre :
un module de gestion dynamique d'abonnement (14) qui est respectivement en connexion physique ou en communication avec le tampon de données (12), avec un module d'enregistrement de données (15) et avec le premier module d'accès aux données (11), lequel module (14) est conçu pour s'abonner à des données distantes, et
pour annuler l'abonnement aux données distantes ayant une fréquence d'utilisation inférieure à un seuil défini ; et
le module d'enregistrement de données (15), pour enregistrer les informations d'utilisation des données distantes, et **caractérisé en ce que** :
le gestionnaire de données (2) comprend en outre
un module de publication de données (25) qui est en connexion physique ou en communication avec l'unité de stockage de données (24), lequel module est conçu pour lire et analyser les données contenues dans l'unité de stockage de données (24) et sauvegarder des informations de description des données qui sont obtenues en décrivant selon une classification les données contenues dans le gestionnaire de données conformément à un type de données et à un attribut de données, et
dans lequel le module de gestion dynamique d'abonnement (14), qui est respectivement en communication avec le module de gestion d'abonnement (21), avec le module de notification (23) et avec le module de publication de données (25), est conçu pour demander les informations de description sauvegardées dans le module de publication de données (25), construire des informations de demande d'abonnement et les envoyer au module de gestion d'abonnement (21), et recevoir les données faisant l'objet d'un abonnement envoyées par le module de notification (23).

2. Système de gestion distribuée de données selon la revendication 1, **caractérisé en ce que** le module de gestion dynamique d'abonnement (14) et le module d'enregistrement de données (15) sont intégrés dans un module.

3. Procédé d'abonnement à des données distantes, consistant à :
construire et envoyer, au moyen d'une extrémité effectuant un abonnement, des informations de demande d'abonnement qui comprennent une condition d'abonnement détaillée ;
extraire, au moyen d'un gestionnaire de données, les données auxquelles l'abonnement doit être effectué en fonction des informations de demande d'abonnement, et envoyer les données à l'extrémité effectuant l'abonnement ; et
gérer, au moyen de l'extrémité effectuant l'abonnement, les données obtenues, et annuler l'abonnement aux données ayant une fréquence d'utilisation inférieure à un seuil défini,
dans lequel la construction et l'envoi d'informations de demande d'abonnement, qui comprennent une condition d'abonnement détaillée, consistent à :
demander des informations de description des données conformément à une exigence d'abonnement aux données qui est prédéfinie, et déterminer les données auxquelles l'abonnement doit être effectué conformément aux informations de description ; et
construire, sauvegarder et envoyer les informations de demande d'abonnement des données en fonction des données auxquelles l'abonnement doit être effectué, dans lequel les informations de description des données sont obtenues en décrivant selon une classification les données contenues dans le gestionnaire de données conformément à un type de données et à un attribut de données.

4. Procédé selon la revendication 3, **caractérisé en ce qu'**il consiste en outre, lorsque les données contenues dans le gestionnaire de données sont modifiées, à décrire selon une classification les données modifiées conformément au type de données et à l'attribut de données ;
à déterminer si les données modifiées font l'objet d'un abonnement et, si les données modifiées font l'objet d'un abonnement, à envoyer les données modifiées à l'extrémité effectuant l'abonnement.

5. Procédé selon la revendication 4, **caractérisé en ce qu'**il consiste en outre, après qu'il a été déterminé que les données modifiées font l'objet d'un abonnement, à :
déterminer si l'instant courant précède un instant représenté par une période de validité de l'abonnement aux données, et si oui, envoyer les données modifiées à l'extrémité effectuant l'abonnement.

6. Procédé selon la revendication 4, **caractérisé en ce qu'**il consiste en outre, après qu'il a été déterminé que les données modifiées font l'objet d'un abonnement, à :
déterminer si le nombre des données modifiées est inférieur au volume de données des données faisant l'objet d'un abonnement, et si oui, envoyer les données à l'extrémité effectuant l'abonnement.

7. Procédé selon la revendication 3, **caractérisé en ce que** la construction des informations de demande d'abonnement des données auxquelles un abonnement doit être effectué consiste à :
construire les informations de demande d'abonnement en utilisant un élément de base et un opérateur relationnel ; ou
construire les informations de demande d'abonnement en utilisant un élément de base, un opérateur relationnel et un opérateur logique.

8. Procédé selon la revendication 3, **caractérisé en ce que** les informations de demande d'abonnement comprennent :
les données auxquelles un abonnement doit être effectué et la condition d'abonnement aux données, des informations sur la période de validité de l'abonnement aux données, la gamme d'abonnement aux données, ou le volume de données autorisé pour l'abonnement.

9. Procédé selon la revendication 8, **caractérisé en ce que** les informations de demande d'abonnement qui sont sauvegardées comprennent :
les données auxquelles l'abonnement doit être effectué ou la condition d'abonnement aux données.

10. Procédé selon la revendication 3, **caractérisé en ce que** l'envoi des informations de demande d'abonnement consiste à :
envoyer les informations de demande d'abonnement en utilisant le protocole TCP/IP (Protocole de Transmission de Contrôle/Protocole Internet), HTTP (Protocole de Transfert Hypertexte) ou SOAP (Protocole d'Accès à des Objets Simples).

11. Procédé selon la revendication 3, **caractérisé en ce que** l'envoi des données auxquelles l'abonnement doit être effectué comprend :
l'envoi des données auxquelles l'abonnement doit être effectué en utilisant le langage XML (Langage de Balisage Extensible).

12. Procédé selon la revendication 3, **caractérisé en ce que** la gestion des données obtenues et l'annulation de l'abonnement aux données ayant une fréquence d'utilisation inférieure au seuil défini consistent à :
enregistrer le nombre d'utilisations des données obtenues ; et
comparer le nombre d'utilisations enregistré à un seuil prédéfini et, si le nombre d'utilisations qui est enregistré est inférieur au seuil, annuler l'abonnement aux données obtenues.

13. Procédé selon la revendication 12, **caractérisé en ce que** la gestion de données distantes consiste en outre, avant que l'abonnement aux données obtenues ne soit annulé, à :
réinitialiser à 0 la valeur du nombre d'utilisations de chacune des données auxquelles un abonnement est effectué.
